(19) Europäisches Patentamt
European Patent Office
Office européen des brevets

(11) EP 4 679 296 A2

(12) **EUROPEAN PATENT APPLICATION**

(43) Date of publication:
**14.01.2026 Bulletin 2026/03**

(21) Application number: **25187962.3**

(22) Date of filing: **07.07.2025**

(51) International Patent Classification (IPC):
***G06F 17/11*** *(2006.01)* ***G06N 5/00*** *(2023.01)*

(52) Cooperative Patent Classification (CPC):
**G06F 17/11; G06N 5/00**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **11.07.2024 JP 2024111464**

(71) Applicant: **FUJITSU LIMITED**
**Kawasaki-shi, Kanagawa 211-8588 (JP)**

(72) Inventor: **SAZAWA, Shinichi**
**Kawasaki-shi, 211-8588 (JP)**

(74) Representative: **Haseltine Lake Kempner LLP**
**Cheapside House**
**138 Cheapside**
**London EC2V 6BJ (GB)**

(54) **COMPUTER PROGRAM, DATA PROCESSING APPARATUS, AND DATA PROCESSING METHOD**

(57) A processing unit carries out a process for performing a first solution search for an integer programming problem including a plurality of state variables using a metaheuristic method, and a second solution search using a branch and bound method for the integer programming problem relaxed linearly. In the process, the processing unit identifies, based on information on first solutions calculated for each of a plurality of subproblems obtained through branching operations in the second solution search, some of the plurality of state variables whose values are fixed in any of the plurality of subproblems; performs the first solution search while keeping fixed the values of the identified some of the plurality of state variables; and performs branch cutting in the second solution search using a first evaluation function value of a second solution obtained by the first solution search.

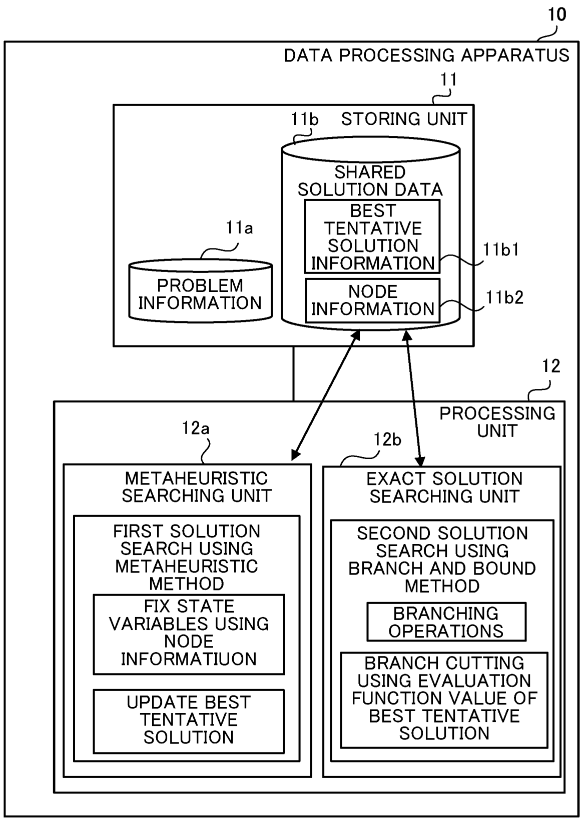


FIG. 1



Processed by Luminess, 75001 PARIS (FR)

## Description

FIELD

The embodiments discussed herein relate to a computer program, a data processing apparatus, and a data processing method.

BACKGROUND

Metaheuristic techniques are known as a method for obtaining approximate solutions to integer programming problems in practical amounts of time. Examples of the metaheuristic techniques include a local search method and a greedy method (see, for example, Shunji Umetani, "Exploiting variable associations to configure efficient local search algorithms in large-scale binary integer programs", [online], May 2017, [Retrieved on June 6, 2024], Retrieved from the Internet <https://arxiv.org/pdf/1604.08448>). On the other hand, a branch and bound method is known as a method for obtaining exact solutions to integer programming problems. In order to use the branch and bound method more efficiently, a technique called branch cutting (or pruning) may be employed (see, for example, Japanese Laid-open Patent Publication No. 07-319848 and International Publication Pamphlet No. WO2022/097317).

Since the branch and bound method is an exact solution technique for obtaining an exact solution, there is a problem in that the calculation time increases as the problem scale increases, and the solving performance for an integer programming problem is not sufficiently improved.

SUMMARY

One aspect of the embodiments is to improve solving performance.

According to one aspect, there is provided a computer program that causes a computer to execute a process for performing a first solution search for an integer programming problem including a plurality of state variables using a metaheuristic method, and a second solution search using a branch and bound method for the integer programming problem relaxed linearly, the process including: identifying, based on information on first solutions calculated for each of a plurality of subproblems obtained through branching operations in the second solution search, some of the plurality of state variables whose values are fixed in any of the plurality of subproblems; performing the first solution search while keeping fixed the values of the identified some of the plurality of state variables; and performing branch cutting in the second solution search using a first evaluation function value of a second solution obtained by the first solution search.

BRIEF DESCRIPTION OF DRAWINGS

The invention is described, by way of example only, with reference to the following drawings, in which:

FIG. 1 illustrates an example of a data processing apparatus and a data processing method according to a first embodiment;
FIG. 2 illustrates an example of a second solution search and branch cutting using a branch and bound method;
FIG. 3 illustrates an example of hardware of a data processing apparatus according to a second embodiment;
FIG. 4 is a block diagram illustrating an example of functions of the data processing apparatus;
FIG. 5 illustrates an example of node information and state variables to be fixed;
FIG. 6 illustrates a flowchart of an example processing procedure for performing a solution search using a metaheuristic method by the data processing apparatus; and
FIG. 7 illustrates a flowchart of an example processing procedure for performing a solution search using a branch and bound method by the data processing apparatus.

DESCRIPTION OF EMBODIMENTS

Several embodiments will be described below with reference to the accompanying drawings.

(a) First Embodiment

FIG. 1 illustrates an example of a data processing apparatus and a data processing method according to a first embodiment.

A data processing apparatus 10 according to the first embodiment includes a storing unit 11 and a processing unit 12.

The storing unit 11 is a volatile storage device (for example, an electronic circuit such as a dynamic random access memory (DRAM)) or a non-volatile storage device (for example, an electronic circuit such as a flash memory, a hard disk drive (HDD), or the like). The storing unit 11 may include an electronic circuit such as a register. The storing unit 11 stores problem information 11a of an integer programming problem and shared solution data 11b.

The integer programming problem is a problem that is able to formulate various combinatorial optimization problems such as a traveling salesman problem, a knapsack problem, and a scheduling problem.

An evaluation function (also referred to as an objective function) of a binary integer linear optimization problem of n variables, which is an example of the integer programming problem, is expressed by Expression (1) below.

$$\sum_{j=1}^{n} c_j x_j \qquad x_j \in \{0,1\} \quad j = 1, ..., n \tag{1}$$

Constraint conditions of the binary integer linear optimization problem of n variables are expressed by, for example, Expression (2) below.

$$\sum_{j=1}^{n} a_{ij} x_j \leq b_i \quad i = 1, ..., m \tag{2}$$

$x_j$ is a state variable of 0 or 1 with an identification number j (j = 1, ..., n). $c_j$ is the cost for $x_j$. $a_{ij}$ is a coefficient that becomes 1 when a constraint condition with an identification number of i (i = 1, ..., m) is imposed on the state variable with the identification number j, and becomes 0 when the constraint condition is not imposed. $b_i$ is a coefficient related to the constraint condition with the identification number i.

The binary integer linear optimization problem of n variables is a problem of searching for a solution that minimizes or maximizes the evaluation function value expressed by Expression (1) among solutions satisfying the constraint conditions expressed by Expression (2).

Note that the binary integer linear optimization problem of n variables represented by the Expressions (1) and (2) may be solved by reducing it to unconstrained optimization of an evaluation function represented by Expression (3) below.

$$\sum_{j=1}^{n} c_j x_j + \sum_{i=1}^{m} w_i max\left(0, \sum_{j=1}^{n} a_{ij} x_j - b_i\right) \tag{3}$$

In Expression (3), $w_i$ is a positive real number representing a weight of the constraint condition with the identification number i.

The problem information 11a stored in the storing unit 11 includes $a_{ij}$, $b_i$, $c_j$, and $w_i$ in the case of the integer programming problem expressed by Expressions (1), (2), and (3) above.

The shared solution data 11b includes best tentative solution information 11b1 obtained by a first solution search performed using a metaheuristic method and a second solution search performed using a branch and bound method. The shared solution data 11b further includes node information 11b2 obtained by the branch and bound method.

The best tentative solution information 11b1 includes a solution with the best evaluation function value (best tentative or incumbent solution) among integer solutions (tentative solutions) obtained at a certain time point of the first and second solution searches, along with the corresponding best evaluation function value. In a problem where the objective is to minimize the evaluation function value, the best tentative solution is the one with the smallest evaluation function value among tentative solutions obtained at a certain time point of the first and second solution searches. The tentative solutions are integer solutions, that is, solutions in each of which the values of all state variables are integers (each value is, for example, either 0 or 1).

The node information 11b2 is information of a solution calculated for each of a plurality of subproblems obtained by branching operations in the second solution search. The solution obtained for each subproblem in this manner is, hereinafter, referred to as a node solution. As will be described later, in the second solution search using the branch and bound method, the integer linear problem is linearly relaxed, and non-integer values are allowed as solutions of subproblems. Therefore, each subproblem may be referred to as a relaxed problem.

The node solution of a certain subproblem is a solution whose evaluation function value is the best value (a lower limit value in a problem where the objective is to minimize the evaluation function value) for the subproblem. In addition to the node solutions, the node information 11b2 includes, for example, the evaluation function value of each of the node solutions and identification information of state variables whose values are fixed in each subproblem. Note that the node solutions may be referred to as relaxed solutions because non-integer values are allowed.

The best tentative solution information 11b1 and the node information 11b2 are data shared in both the first solution search using the metaheuristic method and the second solution search using the branch and bound method, which will be described later.

The storing unit 11 may store various types of data such as calculation conditions used when the processing unit 12 executes a data processing method described later. When the processing unit 12 executes a part or all of the processing of the data processing method described later by software, a program for executing the processing is stored in the storing unit 11.

The processing unit 12 in FIG. 1 may be realized by, for example, a processor that is hardware such as a central processing unit (CPU), a graphics processing unit (GPU), or a digital signal processor (DSP). The processor may include a plurality of processor cores. The processing unit 12 may include a plurality of processors. In addition, the processing unit 12 may be realized using an electronic circuit such as an application specific integrated circuit (ASIC) or a field programmable gate array (FPGA).

The processing unit 12 performs the first solution search of an integer programming problem using a metaheuristic method, and performs the second solution search of the integer programming problem linearly relaxed using a branch and bound method, which is one of exact solution methods. Examples of the metaheuristic method include a local search method and a greedy method.

The local search method is a technique in which, when there is an improved solution in the vicinity of a current solution (for example, a solution having a smaller evaluation function value than the current solution), the current solution is replaced with the improved solution. Examples of the local search method include a Markov Chain Monte Carlo (MCMC) method and a rejection free method. The MCMC method is a technique that stochastically determines a neighboring solution to be transitioned next among a plurality of neighboring solutions. The rejection free method is a type of MCMC method in which a transition is not rejected in each trial.

The greedy method is a technique that, in a problem where the objective is to minimize the evaluation function value, repeatedly selects the next state by flipping the value of the state variable that results in the smallest change in the evaluation function value, considering all possible changes to each state variable, including those that increase the evaluation function value. A tabu search method is known as an example of the greedy method. The tabu search method is a technique that avoids getting trapped in the same local solution by prohibiting changes to the values of certain state variables for a fixed period of time after they have been changed.

It is also possible to combine the local search method and the greedy method. For example, there is an approach that searches for a solution while updating the weight $w_i$ of the constraint condition in Expression (3). Since updating $w_i$ changes the evaluation function, the local optimal solution after the update is no longer a local optimal solution before $w_i$ is updated. By leveraging this property, combining dynamic updates of $w_i$ with a greedy algorithm makes it possible to escape from a local optimal solution. When the evaluation function is linear and no constraints are present, a trivial optimal solution is obtained by setting each state variable to 0 if its coefficient ($c_j$) in the evaluation function is non-negative, and to 1 if its coefficient ($c_j$) is negative.

In the branch and bound method, the condition that the state variable $x_j$ is an integer is relaxed, leading to solution to the resulting integer programming problem (i.e., linearly relaxed integer programming problem), where the state variables are allowed to take real values between 0 and 1. This solution is referred to as the node solution. If the node solution is not an integer solution, one non-integer state variable is selected, and two subproblems are generated by fixing the value of that state variable to 0 and 1, respectively. A node solution is then computed for each of the subproblems. This process is repeated until an integer solution is found. The operation of dividing (branching) the problem into two subproblems in this manner is called a branching operation.

Incidentally, the evaluation function values of the two node solutions obtained by the branching operation have a property of being equal to or worse than the evaluation function value of a node solution of a subproblem before branching. By leveraging this property, in the branch and bound method, further branching operations are omitted for subproblems that yield node solutions with evaluation function values worse than the best evaluation function value (the smallest value in a problem where the objective is to minimize the evaluation function value) obtained so far. The omission of branching operations is called branch cutting or pruning. When a node solution of a certain subproblem is an infeasible solution (a solution that does not satisfy the constraint conditions defined by Expression (2)), the branching operation is also omitted.

In the example of FIG. 1, the processing unit 12 includes a metaheuristic searching unit 12a that performs the first solution search of an integer programming problem using the metaheuristic method, and an exact solution searching unit 12b that performs the second solution search of the integer programming problem linearly relaxed using the branch and bound method. The metaheuristic searching unit 12a and the exact solution searching unit 12b may be implemented in different processor cores, for example. With the metaheuristic searching unit 12a and the exact solution searching unit 12b, it is possible to simultaneously execute the first solution search using the metaheuristic method and the second solution search using the branch and bound method in parallel. The metaheuristic searching unit 12a and the exact solution searching unit 12b share the shared solution data 11b.

Based on the node information 11b2, the metaheuristic searching unit 12a identifies, among a plurality of state variables representing a solution of the integer programming problem, some state variables whose values are fixed in any of a plurality of subproblems. Then, the metaheuristic searching unit 12a performs the first solution search while keeping fixed the values of the identified state variables.

For example, the metaheuristic searching unit 12a performs the first solution search while keeping fixed the values of state variables that are fixed in the subproblem associated with the best node solution among a plurality of subproblems. For the state variables whose values are fixed in the subproblem from which a good node solution has been obtained, keeping the same values fixed in the first solution search by the metaheuristic searching unit 12a increases the possibility of obtaining a better tentative solution.

The subproblem associated with the best node solution refers to the subproblem with the best evaluation function value among a plurality of subproblems indicated by the node information 11b2. The metaheuristic searching unit 12a may use the above node solution as the initial solution in performing the first solution search.

By performing the first solution search while keeping fixed the values of some state variables that are fixed in any of the plurality of subproblems, the search space is narrowed, leading to improved efficiency in the first solution search.

When the first solution search finds a solution with a better evaluation function value than the previous best tentative solution, the metaheuristic searching unit 12a updates the best tentative solution information 11b1 of the shared solution data 11b.

On the other hand, the exact solution searching unit 12b of the processing unit 12 performs branch cutting in the second solution search using the branch and bound method, based on the best tentative solution information 11b1 and the evaluation function value of the solution obtained through the first solution search using the metaheuristic method.

For example, when the best tentative solution has been obtained by the first solution search, the exact solution searching unit 12b compares the evaluation function value of a node solution, which is calculated for a subproblem generated by a branching operation during the second solution search, with that of the best tentative solution. Then, based on the comparison result, the exact solution searching unit 12b determines whether the best tentative solution is a better solution than the node solution. When determining that the best tentative solution is a better solution than the node solution, the exact solution searching unit 12b performs branch cutting by omitting further branching operations for subproblems obtained through branching operations.

In a problem where the objective is to minimize the evaluation function value of Expression (1) or (3), when the evaluation function value of Expression (3) is smaller than that of the node solution of a subproblem obtained during the second solution search, the branching operation for the subproblem is omitted. The exact solution searching unit 12b may perform branch cutting also when the evaluation function values of the best tentative solution and the node solution are the same.

When the best tentative solution is a tentative solution in the second solution search, the exact solution searching unit 12b performs branch cutting using the evaluation function value of the tentative solution.

FIG. 2 illustrates an example of the second solution search and branch cutting using the branch and bound method.

First, a node solution that minimizes the evaluation function value is obtained for a node n0 representing an original relaxed problem (i.e., an integer programming problem with relaxed constraints). In a case where there are one or more state variables that are not integers in the node solution of the node n0, one of the one or more non-integer state variables is selected. In the example of FIG. 2, $x_1$ is selected. Then, two subproblems (nodes n1 and n2) in which the value of $x_1$ is fixed to 0 and 1, respectively, are generated, and a node solution is obtained for each of the subproblems.

In a case where there are one or more non-integer state variables in the node solution of the node n1, one of the one or more non-integer state variables is selected. Such a node solution is called a relaxed solution. In the example of FIG. 2, $x_2$ is selected. Then, two subproblems (nodes n3 and n4) in which the value of $x_2$ is fixed to 0 and 1, respectively, are generated, and a node solution is obtained for each of the subproblems. Similarly, when there are one or more non-integer state variables in the node solution of the node n2, one of the one or more non-integer state variables is selected. In the example of FIG. 2, $x_4$ is selected. Then, two subproblems (nodes n5 and n6) in which the value of $x_4$ is fixed to 0 and 1, respectively, are generated, and a node solution is obtained for each of the subproblems.

The branching operations as described above are repeated, and in the example of FIG. 2, nodes n7 to n20 are further generated. However, when a node solution which is an integer solution (tentative solution) is obtained, branching for the node is not performed. In the example of FIG. 2, the node solution of the node n7 is a tentative solution. In addition, branching is not performed for a node whose node solution does not satisfy the constraint conditions (i.e., an infeasible solution). In the example of FIG. 2, the node solutions of the nodes n12, n14, n18, and n19 are infeasible solutions.

When it is determined, based on the comparison between the best value, which is the evaluation function value of the best tentative solution, and the evaluation function value of the node solution of a certain node, that the best tentative solution is a better solution than the node solution, branching is not performed for that node. That is, branch cutting takes place. The best value is denoted by $z_{best}$ in FIG. 2. For example, the tentative solution of the node n7 is the best tentative solution and, when it is determined that the tentative solution of the node n7 is a better solution than the node solution of the node n16, branch cutting is applied to the node n16.

Further, branch cutting is also applied using the evaluation function value of the best tentative solution ($z_{best}$) obtained through the first solution search. In the example of FIG. 2, it is determined that the best tentative solution obtained through the first solution search is a better solution than the node solutions of the nodes n10, n13, and n20, and branch cutting is performed on the nodes n10, n13, and n20.

Thus, by performing branch cutting using the evaluation function value of a solution obtained by the metaheuristic method, branch cutting is conducted efficiently, thereby improving the solving performance of the second solution search using the branch and bound method.

The first and second solution searches as described above are repeated, and when a predetermined search termination condition is satisfied, the processing by the data processing apparatus 10 is completed. At this time, for example, the data processing apparatus 10 may output the best tentative solution included in the best tentative solution information 11b1 as the solution search result of the integer programming problem. The solution search result may include an evaluation function value corresponding to the best tentative solution.

As described above, the data processing apparatus 10 performs the first solution search for an integer programming problem including a plurality of state variables using the metaheuristic method, and also performs the second solution search for the integer programming problem linearly relaxed using the branch and bound method. Based on the node information 11b2, the data processing apparatus 10 identifies, among the plurality of state variables, some state variables whose values are fixed in any of a plurality of subproblems, and performs the first solution search while keeping fixed the values of the identified state variables. In addition, the data processing apparatus 10 performs branch cutting in the second solution search using the evaluation function value of a solution obtained by the first solution search. As a result, both the first and second solution searches are made more efficient, thereby improving the overall solving performance.

The metaheuristic searching unit 12a may include a plurality of searching units that perform the first solution search using the same or different types of metaheuristic methods. In this case, the exact solution searching unit 12b may perform branch cutting using, as the best tentative solution, the tentative solution with the best evaluation function value among tentative solutions calculated by the plurality of searching units that perform the first solution search.

(b) Second Embodiment

FIG. 3 illustrates an example of hardware of a data processing apparatus according to a second embodiment.

A data processing apparatus 20 is, for example, a computer, and includes a processor 21, a random access memory (RAM) 22, an HDD 23, a GPU 24, an input interface 25, a media reader 26, and a communication interface 27. These units are connected to a bus.

The processor 21 is a processor such as a GPU or a CPU including an arithmetic circuit that executes instructions of a program. The processor 21 loads at least a part of a program or data stored in the HDD 23 into the RAM 22 and executes the program. The processor 21 may include a plurality of processor cores. The data processing apparatus 20 may include a plurality of processors. It is also possible that the processor executing a certain process among a plurality of processes performed by the data processing apparatus 20 is different from the processor executing a process that is different from the certain process. The processor may be referred to as processor circuitry. A set of a plurality of processors (multiprocessor) may be referred to as a "processor".

The RAM 22 is a volatile semiconductor memory that temporarily stores programs to be executed by the processor 21 and data to be used by the processor 21 for computation. The data processing apparatus 20 may include a memory type other than the RAM 22, or it may include a plurality of types of memory.

The HDD 23 is a non-volatile storage device that stores software programs such as an operating system (OS), middleware, and application software, along with data. The programs include, for example, a program that causes the data processing apparatus 20 to execute a process of searching for a solution to an integer programming problem using a metaheuristic method and a branch and bound method. The data processing apparatus 20 may include another type of storage device such as a flash memory or a solid state drive (SSD), or may include a plurality of nonvolatile storage devices.

The GPU 24 outputs an image to a display 24a connected to the data processing apparatus 20 in accordance with an instruction from the processor 21. As the display 24a, a cathode ray tube (CRT) display, a liquid crystal display (LCD), a plasma display panel (PDP), an organic electroluminescence (OEL) display, or the like may be used.

The input interface 25 acquires an input signal from an input device 25a connected to the data processing apparatus 20 and outputs the input signal to the processor 21. As the input device 25a, a pointing device such as a mouse, touch panel, touchpad, or trackball, a keyboard, a remote controller, or a button switch may be used. A plurality of types of input devices may be connected to the data processing apparatus 20.

The media reader 26 is a reader for reading programs and data recorded in a storage medium 26a. As the storage medium 26a, any of the following may be used: a magnetic disk, an optical disk, a magneto-optical disk (MO), and a semiconductor memory. Examples of the magnetic disk include a flexible disk (FD) and HDD. Examples of the optical disk a compact disc (CD) and a digital versatile disc (DVD).

The media reader 26 copies programs and data read from the storage medium 26a to a different storage medium, for example, the RAM 22 or the HDD 23. The read programs are executed, for example, by the processor 21. Note that the storage medium 26a may be a portable storage medium, and may be used to distribute the programs and data. The storage medium 26a and the HDD 23 are sometimes referred to as computer-readable storage media.

The communication interface 27 is connected to a network 27a and communicates with different information processors via the network 27a. The communication interface 27 may be a wired communication interface connected via a cable to a communication device, such as a switch, or may be a wireless communication interface connected via a wireless link to a base station.

Next described are functions of the data processing apparatus 20.

FIG. 4 is a block diagram illustrating an example of functions of the data processing apparatus.

The data processing apparatus 20 includes a problem information storing unit 31, a metaheuristic solver executing unit 32, an exact solution solver executing unit 33, a shared solution data storing unit 34, and an outputting unit 35.

The above units realize functions similar to those of the storing unit 11 and the processing unit 12 illustrated in FIG. 1.

The problem information storing unit 31 and the shared solution data storing unit 34 are implemented using a storage area secured in the RAM 22 or the HDD 23. The metaheuristic solver executing unit 32, the exact solution solver executing unit 33, and the outputting unit 35 may be implemented using, for example, program modules executed by the processor 21.

The metaheuristic solver executing unit 32 and the exact solution solver executing unit 33 may be implemented by one or more different processor cores in the processor 21. For example, when the processor 21 includes eight processor cores, the metaheuristic solver executing unit 32 may be implemented by four of the processor cores, and the exact solution solver executing unit 33 may also be implemented by the remaining four processor cores.

The problem information storing unit 31 stores problem information of an integer programming problem. When the integer programming problem to be calculated is expressed by Expressions (1), (2), and (3), the problem information includes $a_{ij}$, $b_i$, $c_j$, and $w_i$. The problem information may be input by the user operating the input device 25a and stored in the problem information storing unit 31, or may be input via the storage medium 26a or the network 27a and stored in the problem information storing unit 31.

The metaheuristic solver executing unit 32 acquires the problem information and searches for a solution to the integer programming problem using a metaheuristic method such as a local search method or a greedy method. Here, the metaheuristic solver executing unit 32 performs the solution search based on node information 34b while keeping fixed the values of some state variables, among a plurality of state variables, whose values are fixed in a subproblem.

For example, the metaheuristic solver executing unit 32 performs inter-process communication and periodically acquires the node information 34b from the shared solution data storing unit 34. The metaheuristic solver executing unit 32 sets, as the initial solution, the best node solution (i.e., the one with the best evaluation function value) among node solutions individually calculated for each of a plurality of subproblems included in the acquired node information 34b. Then, the metaheuristic solver executing unit 32 performs the solution search based on the node information 34b while keeping fixed the values of state variables whose values are fixed in the subproblem associated with the best node solution.

FIG. 5 illustrates an example of node information and state variables to be fixed.

The node information 34b includes information on node solutions related to the nodes n1 to n3 corresponding to three subproblems. The information on node solutions related to the nodes n1 to n3 includes the state variables whose values are fixed at each node, the corresponding fixed values, and the evaluation function value of the node solution. In the example of Fig. 5, the node solutions themselves are not illustrated; however, the node information 34b may include the node solutions.

In the example of FIG. 5, the node solution of the node n2 has the smallest evaluation function value. In a problem where the objective is to minimize the evaluation function value, the node solution of the node n2 is the best among the node solutions of the nodes n1 to n3. In this case, the metaheuristic solver executing unit 32 uses the node solution of the node n2 as the initial solution and performs solution search for a predetermined number of iterations (e.g., 30 iterations) while fixing the values of $x_1$ to $x_3$ as $x_1 = 0$, $x_2 = 0$, and $x_3 = 1$. As a result, the solution search using the metaheuristic method is more likely to find a solution with a smaller evaluation function value.

Note that the node solution of the node n3 is infeasible, and therefore it is also infeasible in the original integer programming problem. Accordingly, the metaheuristic solver executing unit 32 may newly add an inequality constraint $x_1 + x_2 + x_3 \leq 2$ as an additional constraint.

The metaheuristic solver executing unit 32 may execute, in parallel, solution searches using a plurality of metaheuristic methods, which may be of the same type or of different types.

The exact solution solver executing unit 33 performs solution search for the integer programming problem using the branch and bound method, which is one type of exact solution methods. The exact solution solver executing unit 33 performs branch cutting based on best tentative solution information 34a. For example, the exact solution solver executing unit 33 determines whether the best tentative solution is a better solution than a node solution calculated for a subproblem obtained through a branching operation, based on a comparison between the evaluation function value of the best tentative solution and that of the node solution. When determining that the best tentative solution is a better solution than the node solution, the exact solution solver executing unit 33 performs branch cutting by omitting a branching operation for the subproblem (see FIG. 2 above). Note that when the evaluation function value of the best tentative solution is equal to that of the node solution, the exact solution solver executing unit 33 may also perform branch cutting.

The shared solution data storing unit 34 stores the best tentative solution information 34a and the node information 34b. The best tentative solution information 34a includes information on the best solution (the best tentative solution) among the tentative solutions obtained through solution searches using the metaheuristic method and the branch and bound method. In a problem where the objective is to minimize the evaluation function value, the best tentative solution is the one with the smallest evaluation function value among the tentative solutions obtained at a certain point in time during either of the two solution searches. The node information 34b is information on node solutions calculated for subproblems obtained through branching operations during the solution search using the branch and bound method. In addition to the node solutions, the node information 34b includes, for example, the evaluation function values of the node solutions and identification information of state variables whose values are fixed in the node solutions.

The outputting unit 35 outputs the solution search result of the integer programming problem when the search termination condition is satisfied. For example, the outputting unit 35 may output the best tentative solution information 34a stored in the shared solution data storage unit 34 as the solution search result. The outputting unit 35 may, for example, display the solution search result on the display 24a, transmit it to another data processing apparatus via the network 27a, or store it in an external storage device.

Next described are processing procedures of the data processing apparatus 20.

Processing Procedures

FIG. 6 illustrates a flowchart of an example processing procedure for performing a solution search using a metaheuristic method by the data processing apparatus. In the example of FIG. 6, local search is applied as an example of the metaheuristic method.

Step S10: The metaheuristic solver executing unit 32 searches for a solution to the integer programming problem using local search. In the local search, a determination process is repeated for a predetermined number of iterations. In each iteration, whether to accept changes in the values of the state variables is determined based on the corresponding change in the evaluation function value represented by Equation (3). Among the combinations of state variable values obtained over the predetermined number of iterations, for example, the one with the smallest evaluation function value is taken as the tentative solution of the local search.

Note that, in step S15, if state variables to be fixed have been identified, then in step S10, the local search is performed with the values of those state variables fixed.

Step S11: The metaheuristic solver executing unit 32 determines whether the tentative solution is better than the current best tentative solution indicated in the best tentative solution information 34a. If the metaheuristic solver executing unit 32 determines that the tentative solution is better than the best tentative solution, step S12 is executed. If the metaheuristic solver executing unit 32 determines that the tentative solution is not better than the best tentative solution, step S13 is executed.

Step S12: The metaheuristic solver executing unit 32 updates the best tentative solution information 34a stored in the shared solution data storing unit 34 by using information on the tentative solution obtained in the current local search.

Step S13: The metaheuristic solver executing unit 32 determines whether it is the timing to acquire the node information 34b. The metaheuristic solver executing unit 32 judges that the timing for acquisition has arrived at regular intervals (e.g., every predetermined number of iterations).

If the metaheuristic solver executing unit 32 determines that it is the timing to acquire the node information 34b, step S14 is executed. If the metaheuristic solver executing unit 32 determines that it is not the timing to acquire the node information 34b, step S16 is executed.

Step S14: The metaheuristic solver executing unit 32 acquires the node information 34b from the shared solution data storing unit 34.

Step S15: Based on the node information 34b, the metaheuristic solver executing unit 32 identifies the state variables that are fixed in the subproblem associated with the best node solution among a plurality of subproblems as the state variables to be fixed. The metaheuristic solver executing unit 32 also sets the best node solution as the initial solution for the next local search. Thereafter, the process returns to step S10.

Step S16: The metaheuristic solver executing unit 32 determines whether the termination condition for the solution search has been satisfied. For example, the metaheuristic solver executing unit 32 determines that the termination condition for the solution search has been satisfied if a predetermined time limit has been reached or if an optimal solution already known has been obtained.

If the metaheuristic solver executing unit 32 determines that the termination condition for the solution search has been satisfied, step S17 is executed. If the metaheuristic solver executing unit 32 determines that the termination condition for the solution search has not been satisfied, the process returns to step S10.

Step S17: The outputting unit 35 outputs the solution search result. For example, the outputting unit 35 outputs the best tentative solution information 34a stored in the shared solution data storing unit 34 as the solution search result. This completes the solution search using the metaheuristic method.

FIG. 7 illustrates a flowchart of an example processing procedure for performing a solution search using a branch and bound method by the data processing apparatus.

Step S20: The exact solution solver executing unit 33 sets a subproblem list L to L = {original problem}. The original problem refers to the original integer programming problem.

Step S21: The exact solution solver executing unit 33 determines whether the subproblem list L is empty. If the exact solution solver executing unit 33 determines that the subproblem list L is empty, step S31 is executed. If the exact solution solver executing unit 33 determines that the subproblem list L is not empty, step S22 is executed.

Step S22: The exact solution solver executing unit 33 selects and retrieves one subproblem P from the subproblem list L. Initially, the original problem is retrieved as the subproblem P.

Step S23: The exact solution solver executing unit 33 solves the subproblem P (a relaxed problem). In step S23, a node solution ($x_{relax}$) and its evaluation function value ($z_{relax}$) are obtained.

Step S24: The exact solution solver executing unit 33 determines whether the node solution is infeasible. If the exact solution solver executing unit 33 determines that the node solution is infeasible, the process returns to step S22. If the exact solution solver executing unit 33 determines that the node solution is not infeasible, step S25 is executed.

Step S25: The exact solution solver executing unit 33 reads $z_{best}$ from the shared solution data storing unit 34. $z_{best}$ is the evaluation function value of the best tentative solution included in the best tentative solution information 34a.

Step S26: The exact solution solver executing unit 33 determines whether $z_{relax} \geq z_{best}$ holds. This determines whether the best tentative solution is better than the node solution. If the exact solution solver executing unit 33 determines that $z_{relax} \geq z_{best}$, it is considered that the best tentative solution is better than the node solution. In this case, the generation of new subproblems (branching operation) described later in step S29 is skipped, branch cutting is performed, and the processing returns to step S22. If the exact solution solver executing unit 33 determines that $z_{relax} \geq z_{best}$ does not hold, step S27 is executed.

Step S27: The exact solution solver executing unit 33 determines whether $x_{relax}$ is an integer solution. If the exact solution solver executing unit 33 determines that $x_{relax}$ is an integer solution, step S28 is executed. If the exact solution solver executing unit 33 determines that $x_{relax}$ is not an integer solution, step S29 is executed.

Step S28: The exact solution solver executing unit 33 updates the best tentative solution information 34a stored in the shared solution data storing unit 34. In step S28, $z_{best}$ is updated with $z_{relax}$. Then, the processing returns to step S22.

Step S29: The exact solution solver executing unit 33 adds, to the list L, two subproblems, in one of which a certain non-integer state variable $x_i$ of the subproblem P is fixed to 0 and in the other fixed to 1. Step S29 corresponds to a branching operation.

Step S30: Information on the newly added subproblems (nodes) is added to the node information 34b stored in the shared solution data storing unit 34. Then, the processing returns to step S21.

Step S31: The outputting unit 35 outputs the solution search result. For example, the outputting unit 35 outputs the best tentative solution information 34a stored in the shared solution data storing unit 34 as the solution search result. This completes the solution search using the branch and bound method.

By performing the processes represented in FIGS. 6 and 7, the best tentative solution is obtained from among the tentative solutions derived by the solution search using the metaheuristic method and the solution search using the branch and bound method.

Note that the order of the processes represented in FIGS. 6 and 7 is merely an example, and the order of the processes may be changed as appropriate.

As has been described above, the data processing apparatus 20 performs a solution search for an integer programming problem using a metaheuristic method, and also performs a solution search for a linearly relaxed integer programming problem using a branch-and-bound method. Based on the node information 34b, the data processing apparatus 20 performs the solution search using the metaheuristic method while keeping fixed the values of some state variables, among a plurality of state variables, whose values are fixed in any of a plurality of subproblems. In addition, the data processing apparatus 20 performs branch cutting in the solution search using the branch and bound method by using the evaluation function value of the best tentative solution (best value) obtained through the solution search using the metaheuristic method. As a result, the solution searches using both methods are made more efficient, and the overall solving performance is improved.

As illustrated in FIG. 5, among the plurality of subproblems, the solution search using the metaheuristic method is performed while keeping fixed the values of some state variables that are fixed in the subproblem associated with the best node solution. As a result, the solution search using the metaheuristic method is more likely to find a tentative solution with a smaller evaluation function value.

Furthermore, in the solution search using the branch and bound method, the information of the computed node solution (the node information 34b) is stored in the shared solution data storing unit 34. Then, in the solution search using the metaheuristic method, the node information 34b is periodically retrieved from the shared solution data storing unit 34, and based on the node information 34b, certain state variables whose values are to be fixed are identified. For example, if information of a better node solution than previously obtained is added to the node information 34b, the values of the state variables fixed in the corresponding subproblem are fixed accordingly. As a result, the solution search is restricted to a search space that is more likely to contain better solutions, thereby further improving the search efficiency.

As described above, the above-described processing contents may be realized by causing the data processing apparatus 20 to execute a program.

The program may be stored on a computer-readable recording medium (e.g., the storage medium 26a). Examples of such recording media include magnetic disks, optical disks, magneto-optical disks, and semiconductor memory. Magnetic disks include FDs and HDDs. Optical disks include CDs, CD-recordable (CD-Rs), CD-rewritable (CD-RWs), DVDs, DVD-Rs, and DVD-RWs. The program may be distributed on a portable recording medium. In this case, the program may be copied from the portable recording medium to another recording medium (for example, the HDD 23) and executed.

Having described aspects of the computer program, the data processing apparatus, and the data processing method based on the embodiments above, they are merely examples and the particular details of these illustrative examples shall not be construed as limitations on the appended claims.

According to one aspect, it is possible to improve the performance of solving an integer programming problem.

In any of the above aspects, the various features may be implemented in hardware, or as software modules running on one or more processors/computers.

The invention also provides a computer program or a computer program product comprising instructions which, when executed by a computer, cause the computer to carry out any of the methods/method steps described herein, and a non-transitory computer-readable medium comprising instructions which, when executed by a computer, cause the computer to carry out any of the methods/method steps described herein. A computer program embodying the invention may be stored on a non-transitory computer-readable medium, or it could, for example, be in the form of a signal such as a downloadable data signal provided from an Internet website, or it could be in any other form.

## Claims

**1.** A computer program that causes a computer to execute a process for performing a first solution search for an integer programming problem including a plurality of state variables using a metaheuristic method, and a second solution search using a branch and bound method for the integer programming problem relaxed linearly, the process comprising:

identifying, based on information on first solutions calculated for each of a plurality of subproblems obtained through branching operations in the second solution search, some of the plurality of state variables whose values are fixed in any of the plurality of subproblems;
performing the first solution search while keeping fixed the values of the identified some of the plurality of state variables; and
performing branch cutting in the second solution search using a first evaluation function value of a second solution obtained by the first solution search.

**2.** The computer program according to claim 1, wherein:
the performing of the branch cutting includes:

determining, based on a comparison result between a second evaluation function value of the first solution calculated for a first subproblem of the plurality of subproblems and the first evaluation function value, whether the second solution is better than the first solution, and
skipping the branching operation for the first subproblem upon determining that the second solution is better than the first solution.

**3.** The computer program according to claim 1 or 2, wherein the performing of the first solution search includes performing the first solution search while keeping fixed the values of the identified some of the plurality of state variables that are fixed in a second subproblem, the second subproblem being a subproblem among the plurality of subproblems in which the first solution is best.

**4.** The computer program according to any of the preceding claims, wherein:

the process further comprises:

storing, in a storing unit (11), the information on the first solutions calculated in the second solution search, and
retrieving periodically the information on the first solutions from the storing unit in the first solution search, and

the identifying includes identifying, based on the information on the first solutions, the some of the plurality of state variables whose values are to be fixed.

**5.** A data processing apparatus for performing a first solution search for an integer programming problem including a plurality of state variables using a metaheuristic method, and a second solution search using a branch and bound method for the integer programming problem relaxed linearly, the data processing apparatus comprising:

processing means (12) for:

identifying, based on information on first solutions calculated for each of a plurality of subproblems obtained through branching operations in the second solution search, some of the plurality of state variables whose values are fixed in any of the plurality of subproblems,
performing the first solution search while keeping fixed the values of the identified some of the plurality of state variables, and
performing branch cutting in the second solution search using a first evaluation function value of a second solution obtained by the first solution search;

and
memory means (11) for storing the information on the first solutions and the first evaluation function value.

**6.** A data processing method executed by a computer for performing a first solution search for an integer programming problem including a plurality of state variables using a metaheuristic method, and a second solution search using a branch and bound method for the integer programming problem relaxed linearly, the data processing method comprising:

identifying based on information on first solutions calculated for each of a plurality of subproblems obtained through branching operations in the second solution search, some of the plurality of state variables whose values are fixed in any of the plurality of subproblems;
performing the first solution search while keeping fixed the values of the identified some of the plurality of state variables; and
performing branch cutting in the second solution search using a first evaluation function value of a second solution obtained by the first solution search.

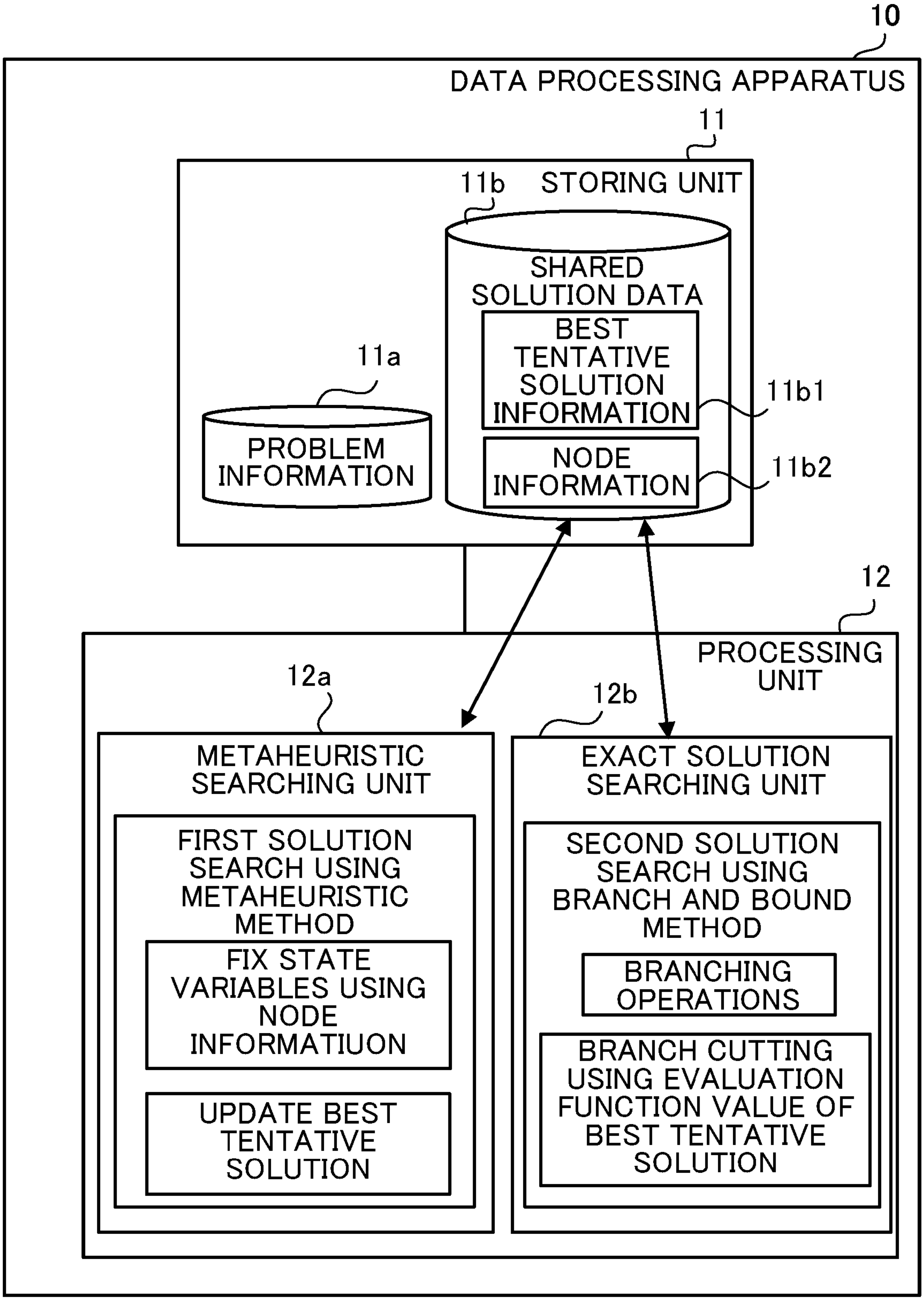
10
DATA PROCESSING APPARATUS
11
STORING UNIT
11b
SHARED SOLUTION DATA
BEST TENTATIVE SOLUTION INFORMATION
11b1
NODE INFORMATION
11b2
11a
PROBLEM INFORMATION
12
PROCESSING UNIT
12a
METAHEURISTIC SEARCHING UNIT
FIRST SOLUTION SEARCH USING METAHEURISTIC METHOD
FIX STATE VARIABLES USING NODE INFORMATIUON
UPDATE BEST TENTATIVE SOLUTION
12b
EXACT SOLUTION SEARCHING UNIT
SECOND SOLUTION SEARCH USING BRANCH AND BOUND METHOD
BRANCHING OPERATIONS
BRANCH CUTTING USING EVALUATION FUNCTION VALUE OF BEST TENTATIVE SOLUTION

FIG. 1

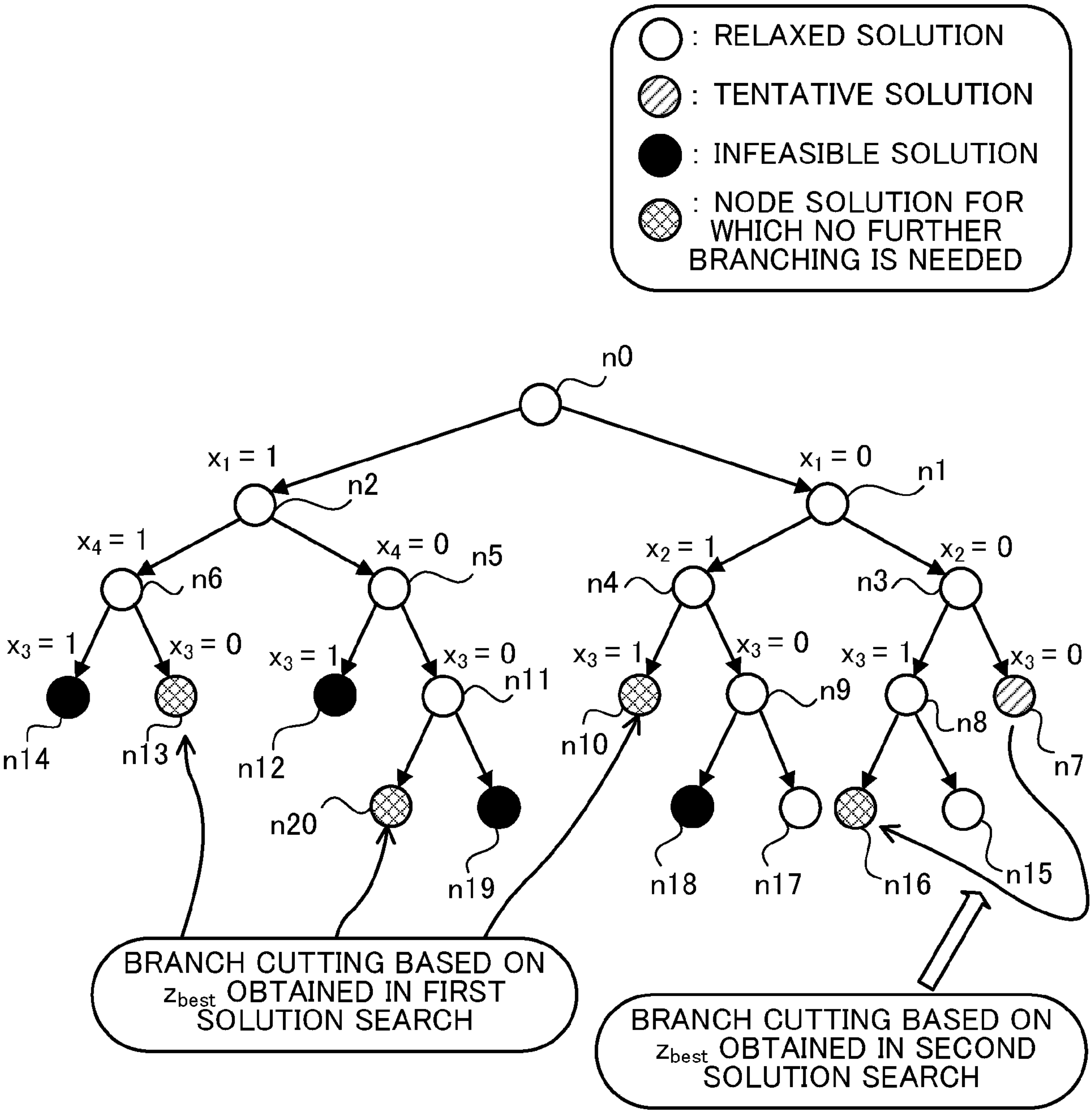
: RELAXED SOLUTION
: TENTATIVE SOLUTION
: INFEASIBLE SOLUTION
: NODE SOLUTION FOR WHICH NO FURTHER BRANCHING IS NEEDED
n0
$x_1 = 1$
$x_1 = 0$
n1
n2
$x_4 = 1$
$x_4 = 0$
n5
n6
$x_2 = 1$
$x_2 = 0$
n4
n3
$x_3 = 1$
$x_3 = 0$
n11
n9
n8
n7
n14
n13
n12
n10
n20
n19
n18
n17
n16
n15
BRANCH CUTTING BASED ON $z_{best}$ OBTAINED IN FIRST SOLUTION SEARCH
BRANCH CUTTING BASED ON $z_{best}$ OBTAINED IN SECOND SOLUTION SEARCH

FIG. 2

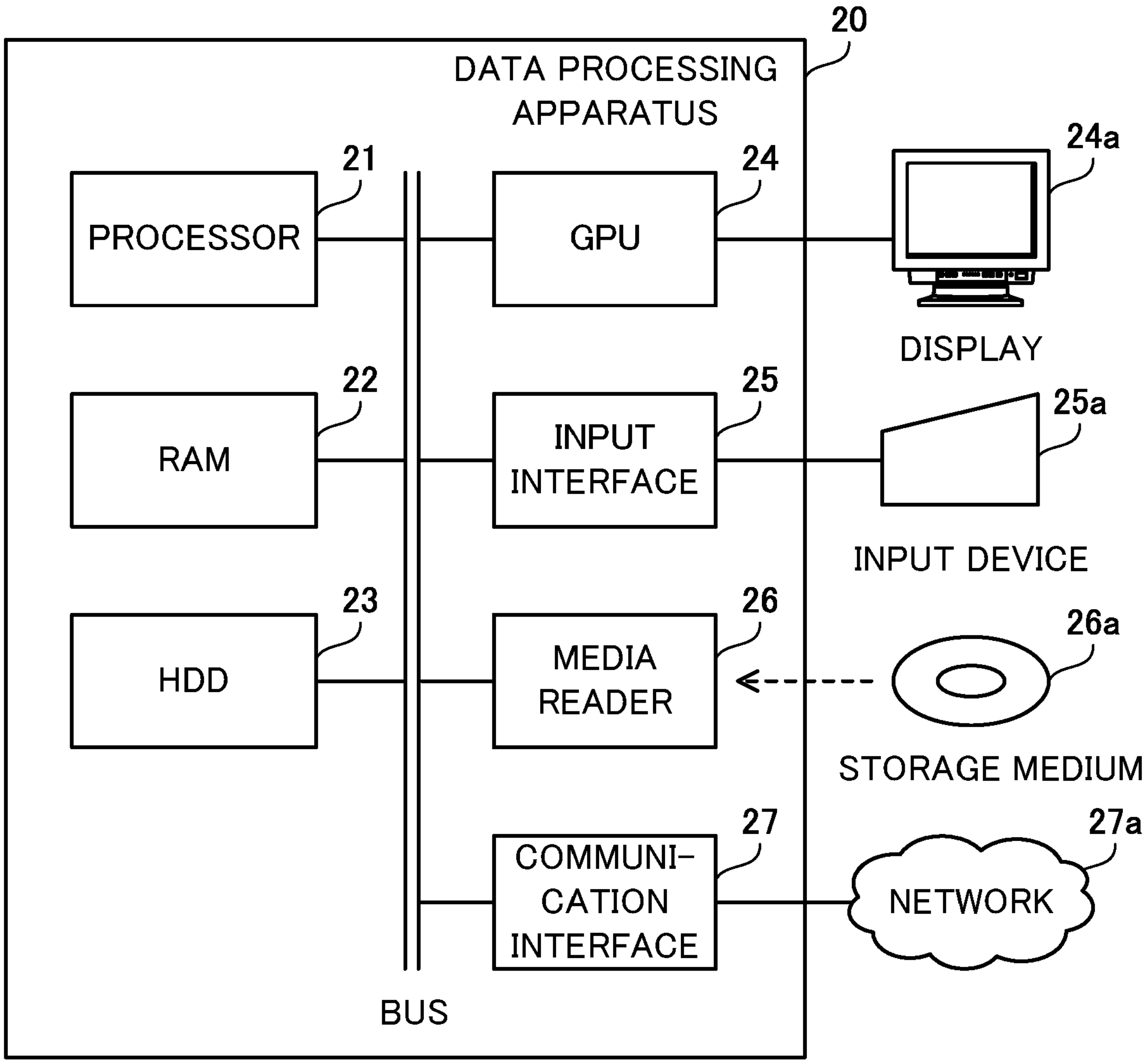
20
DATA PROCESSING APPARATUS
21
PROCESSOR
22
RAM
23
HDD
24
GPU
25
INPUT INTERFACE
26
MEDIA READER
27
COMMUNI-CATION INTERFACE
BUS
24a
DISPLAY
25a
INPUT DEVICE
26a
STORAGE MEDIUM
27a
NETWORK

FIG. 3

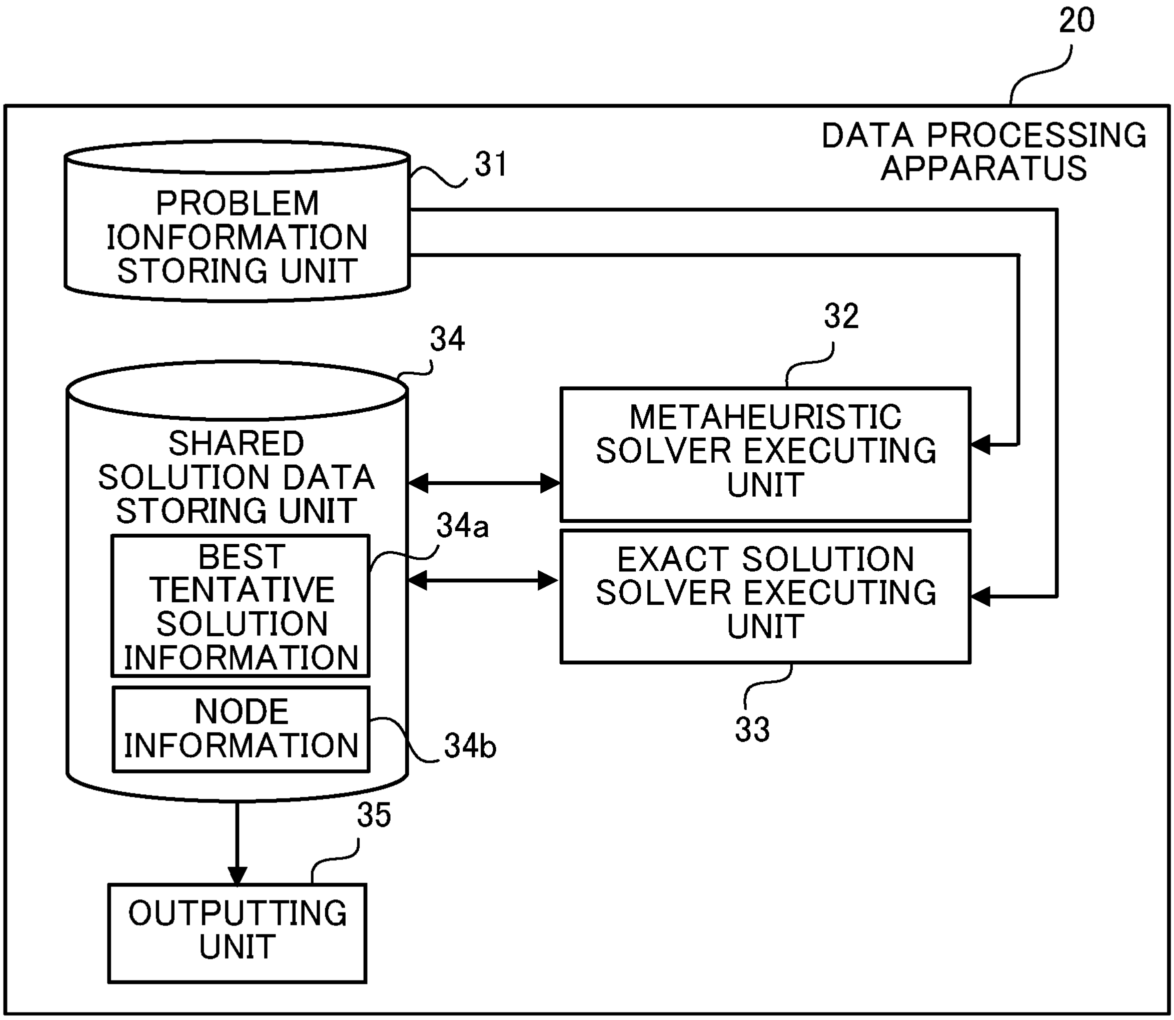
20
DATA PROCESSING APPARATUS
31
PROBLEM IONFORMATION STORING UNIT
34
SHARED SOLUTION DATA STORING UNIT
34a
BEST TENTATIVE SOLUTION INFORMATION
NODE INFORMATION
34b
32
METAHEURISTIC SOLVER EXECUTING UNIT
EXACT SOLUTION SOLVER EXECUTING UNIT
33
35
OUTPUTTING UNIT

FIG. 4

STATE VARIABLES TO BE FIXED

34b

| NODE | FIXED STATE VARIABLES | EVALUATION FUNCTION VALUE OF NODE SOLUTION |
|---|---|---|
| n1 | $x_1 = 0, x_2 = 0, x_3 = 0$ | 100.0 |
| n2 | $x_1 = 0, x_2 = 0, x_3 = 1$ | 90.0 |
| n3 | $x_1 = 1, x_2 = 1, x_3 = 1$ | INFEASIBLE |

ADD $x_1 + x_2 + x_3 \leq 2$ TO CONSTRAINT CONDITIONS

FIG. 5

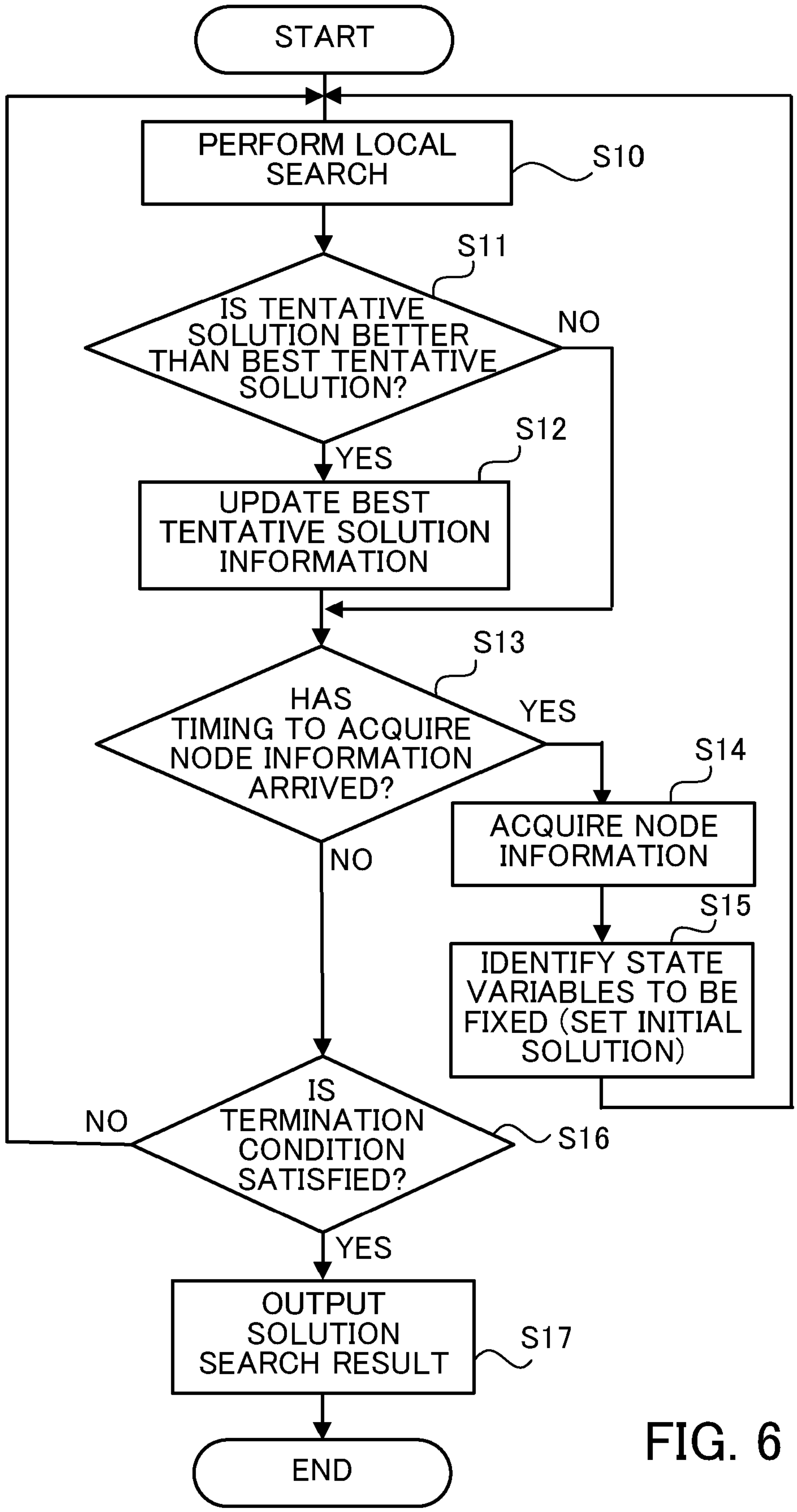
START
PERFORM LOCAL SEARCH
S10
IS TENTATIVE SOLUTION BETTER THAN BEST TENTATIVE SOLUTION?
S11
NO
YES
UPDATE BEST TENTATIVE SOLUTION INFORMATION
S12
HAS TIMING TO ACQUIRE NODE INFORMATION ARRIVED?
S13
YES
NO
ACQUIRE NODE INFORMATION
S14
IDENTIFY STATE VARIABLES TO BE FIXED (SET INITIAL SOLUTION)
S15
IS TERMINATION CONDITION SATISFIED?
S16
NO
YES
OUTPUT SOLUTION SEARCH RESULT
S17
END

FIG. 6

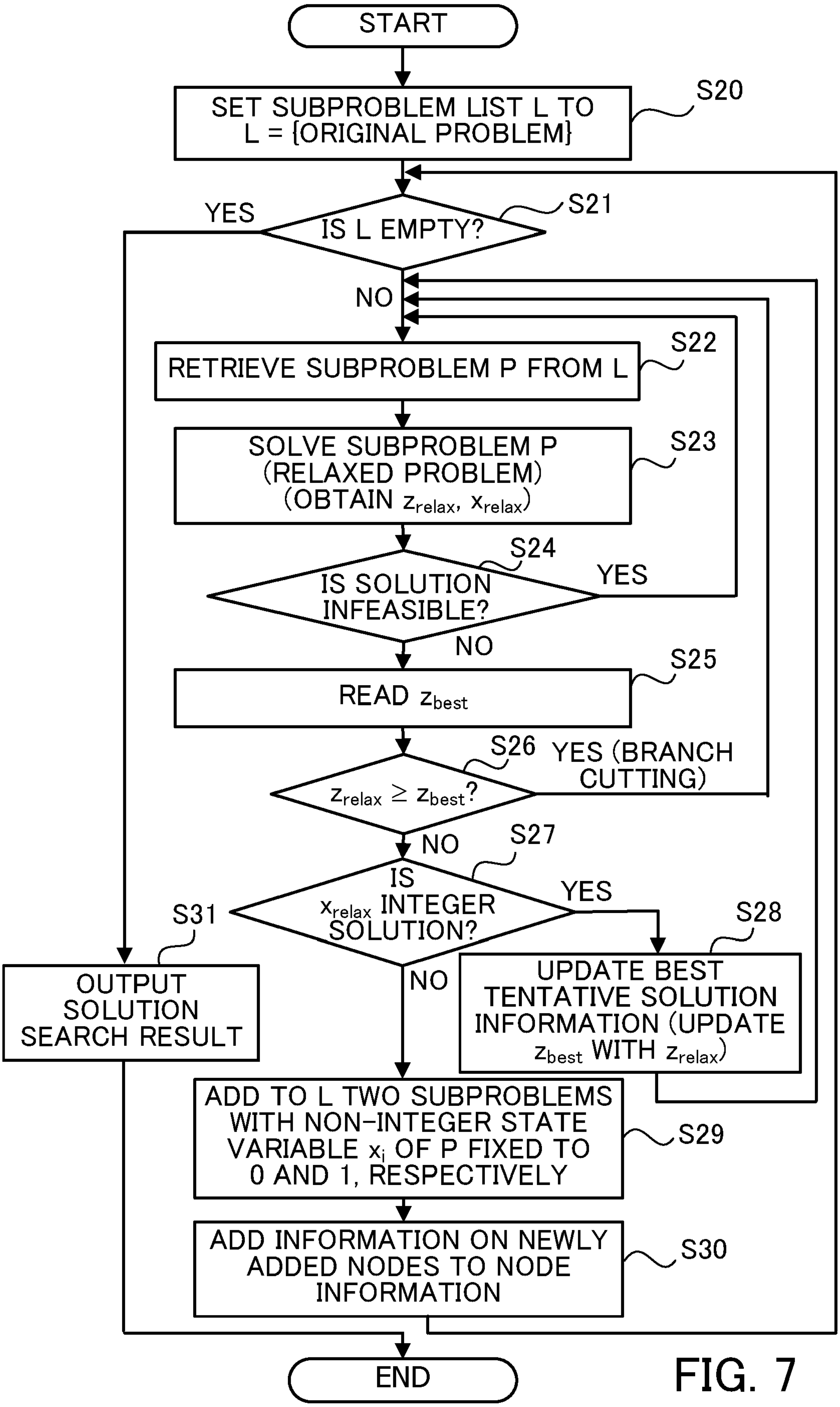
START
SET SUBPROBLEM LIST L TO L = {ORIGINAL PROBLEM}
S20
IS L EMPTY?
S21
YES
NO
RETRIEVE SUBPROBLEM P FROM L
S22
SOLVE SUBPROBLEM P (RELAXED PROBLEM) (OBTAIN $z_{relax}$, $x_{relax}$)
S23
IS SOLUTION INFEASIBLE?
S24
YES
NO
READ $z_{best}$
S25
$z_{relax} \geq z_{best}$?
S26
YES (BRANCH CUTTING)
NO
IS $x_{relax}$ INTEGER SOLUTION?
S27
YES
NO
UPDATE BEST TENTATIVE SOLUTION INFORMATION (UPDATE $z_{best}$ WITH $z_{relax}$)
S28
OUTPUT SOLUTION SEARCH RESULT
S31
ADD TO L TWO SUBPROBLEMS WITH NON-INTEGER STATE VARIABLE $x_i$ OF P FIXED TO 0 AND 1, RESPECTIVELY
S29
ADD INFORMATION ON NEWLY ADDED NODES TO NODE INFORMATION
S30
END

FIG. 7

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 7319848 A
- WO 2022097317 A


### Non-patent literature cited in the description


- **SHUNJI UMETANI**. *Exploiting variable associations to configure efficient local search algorithms in large-scale binary integer programs*, May 2017, https://arxiv.org/pdf/1604.08448